# EUROPEAN PATENT APPLICATION

(11) **EP 0 875 843 A1**
(43) Date of publication of application: **04.11.1998**
(21) Application number: 98302857.2
(22) Date of filing: 14.04.1998
(51) Int. Cl.: G06F 17/30

(54) **Method and apparatus for inserting advertisements and the like in a data stream of an internetworked client for display during the void time**

(30) Priority: 14.04.1997 US 837157
(71) Applicant: Adletts International, LLC, Sausolito, California 94965 (US)
(72) Inventor: Gilmore, Baden Edward McMaster, Sausalito CA 94965 (US); Reid, Christopher, Mil Valley, CA 94941 (US)
(74) Representative: Cross, Rupert Edward Blount

(57) **Abstract**

An improved hypertext viewing system provides inserts to a user at a browser client to view while a requested page loads. The inserts can be any material, but one type of material being animated advertisements. With animated ads, the ad can be downloaded in much less time than it takes to show the ad. This is preferred, because it frees the network to be used to download a requested page between the time that the ad finished downloading and finishes playing. Of course, where the network is much faster than the source of the requested page, such a delay is less of an issue.

## Description

### COPYRIGHT NOTICE

A portion of the disclosure of this patent document contains material which is subject to copyright protection. The copyright owner has no objection to the xerographic reproduction by anyone of the patent document or the patent disclosure in exactly the form it appears in the Patent and Trademark Office patent file or records, but otherwise reserves all copyright rights whatsoever.

### FIELD OF THE INVENTION

The present invention is directed to a system for obtaining and displaying information, such as advertising, on a client system in a networked environment while the client system is waiting for a response from a server system in the networked environment.

### BACKGROUND OF THE INVENTION

Recently, the use of large network systems such as the Internet has increased dramatically. While this usage enables many viewers to view pages and sites on the network, the increased usage has led to increased delays in server responses to client requests for pages. Because of this, a user will often experience significant delays in browsing, where the user is left with nothing to do but wait for a server response.

"Browsing" describes a user's typical interaction with a hypertext document web, such as the global World Wide Web ("WWW"). To browse the WWW, a user runs a browser, which presents the user with an initial page. That initial page is either a default page which the browser displays in the absence of any user instructions or is a page located on a particular server in a particular directory specified by a Universal Resource Locator ("URL") specified by the user. The typical hypertext page displayed in a browser contains a number of "links" to other hypertext pages. The typical browser shows an anchor portion of the link as underlined and distinctly colored text, while maintaining the URL of the linked-to page in browser memory. When the user selects a link, usually by clicking a mouse cursor on the anchor text, the browser will then send out a request for the page specified by the URL of the selected link. For various reasons, the next selected page does not appear immediately. This delay could be due to bandwidth limitations on the user's connection to the Internet, Internet congestion, or low response times from the server which is to provide the link-to page. This delay is so prevalent that most of browsers include an animated icon to indicate to the user that the browser is waiting for a page from a server, so that the user does not get the impression that the browser has simply stopped operating. This idle time or, "void time", between when a web page is requested and is received can be as long as a minute or more. Heretofore, the void time has been a time period in which most users idly wait for the response. Furthermore, if the delay is at the server, the network bandwidth between the user and the Internet is not even being used.

Therefore, what is needed is a system to efficiently use available network bandwidth and to effectively use the opportunity presented by this existence of void times.

### SUMMARY OF THE INVENTION

An improved hypertext viewing system is provided by virtue of the present invention. In one embodiment, inserts are provided to a user at a browser client to view while a requested page loads. The inserts can be any material, but one type of material being animated advertisements. With animated ads, the ad can be downloaded in much less time than it takes to show the ad. This is preferred, because it frees the network to be used to download a requested page between the time that the ad finished downloading and finishes playing. Of course, where the network is much faster than the source of the requested page, such a delay is less of an issue.

A further understanding of the nature and advantages of the inventions herein may be realized by reference to the remaining portions of the specification and the attached drawings.

### BRIEF DESCRIPTION OF THE DRAWINGS

FIG. 1 is a block diagram of a networked client-server system where the client servers are interconnected over the Internet.

FIG. 2 is flowchart illustrating the conventional process of browsing.

FIG. 3 is a flowchart illustrating a process of browsing while provided with additional information during a void time according to the present invention.

FIG. 4(a)-(b) are examples of HTML pages as might be displayed on a client browser display.

FIG. 5 is a view of an HTML page representing a Java applet for beginning an ad according to the present invention.

FIG. 6 is a view of an HTML page for pushing a browser to a target page.

FIG. 7 is a view of an HTML page representing a Java application starter page.

FIG. 8 is a view of a browser display with an ad playing while a page is being loaded.

### DESCRIPTION OF THE PREFERRED EMBODIMENTS

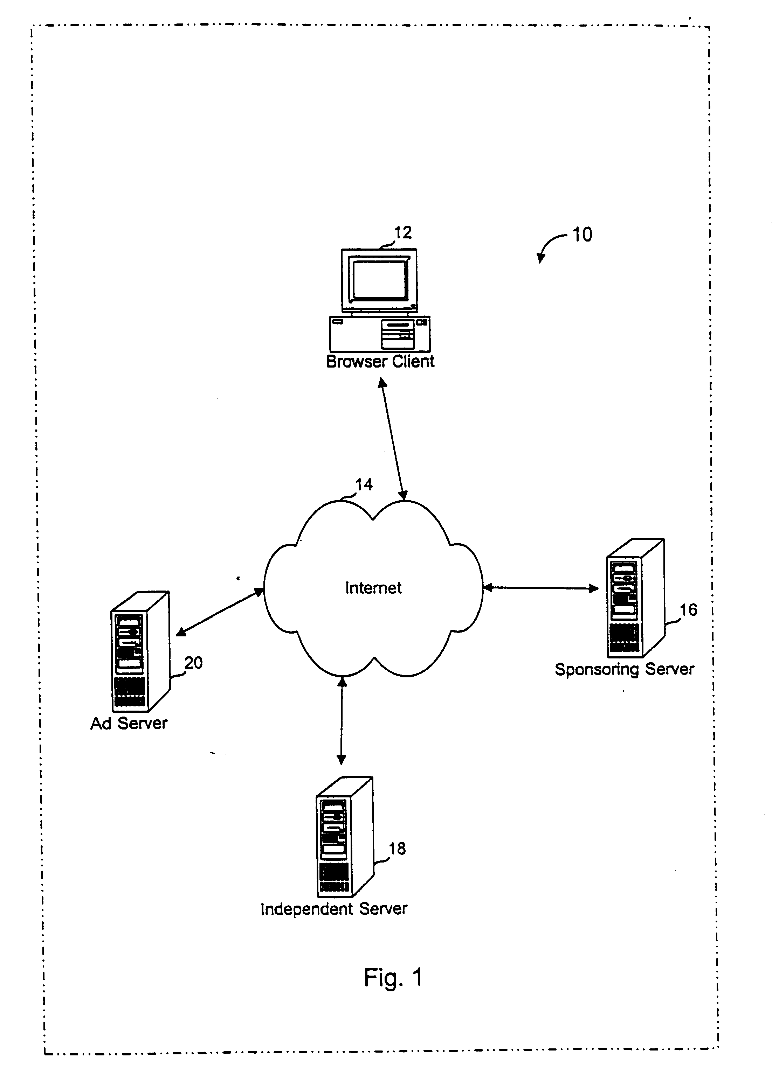

The present invention is usable in many different environments, not all of which are described here. One environment which is described here is shown in FIG. 1. There, an internetworked browsing system 10 is shown, in which a browser client 12 is coupled to the global Internet 14 in a conventional manner. Several servers (a sponsoring server 16, an independent server 18 and an ad server 20) are also shown connected to the Internet 14.

Browser client 12 can be a conventional personal computer (such as those manufactured by Apple Computer, Sun Microsystems and personal computers running the Windows® operating system developed by Microsoft Corporation) running an Internet browser program as is well known in the art. While the examples used herein will refer to a Java□ language compatible browser which can run Java applets and Java applications, it should be understood that many other equivalent configurations could be used as well, such as the ActiveX□ API technology developed by Microsoft Corporation. Browser client 12 is coupled to Intemet 14 using a modem, ISDN connection, network card, or the like to communication using the well known Transport Control Protocol and Internet Protocol ("TCP/IP"). When browsing, browser client 12 generally communicates with servers via Internet 14 using HyperText Transport Protocol ("HTTP") to transfer commands, requests, data and HyperText Markup Language ("HTML") documents.

Three types of servers are shown in FIG. 1. Generally, these servers serve (deliver) HTML pages to clients upon request. These pages (or "Web pages") could be documents retrieved from a storage device at the server or the pages could by dynamically generated pages based on variables stored in tables or associated with the state of a particular client or the server. A collection of pages, logically oriented as a collection on a given server or part of a server (or even physically distributed over multiple servers) are often referred to as a site, or Web site, in reference to the World Wide Web.

It should be understood that the type of a server is not fixed, but may change from time to time, and from page to page. Sponsoring server 16 is so named because it serves pages in cooperation with the operator of ad server 20. Independent server 18 is so named because it need not be aware of ad server 20 to participate in the processes described herein. Ad server 20 is so named because it serves ads which are presented to the user of browser client 12 during void times. However, it should be understood that ad server 20 can just as well serve non-ad materials, such as void time entertainment and the like.

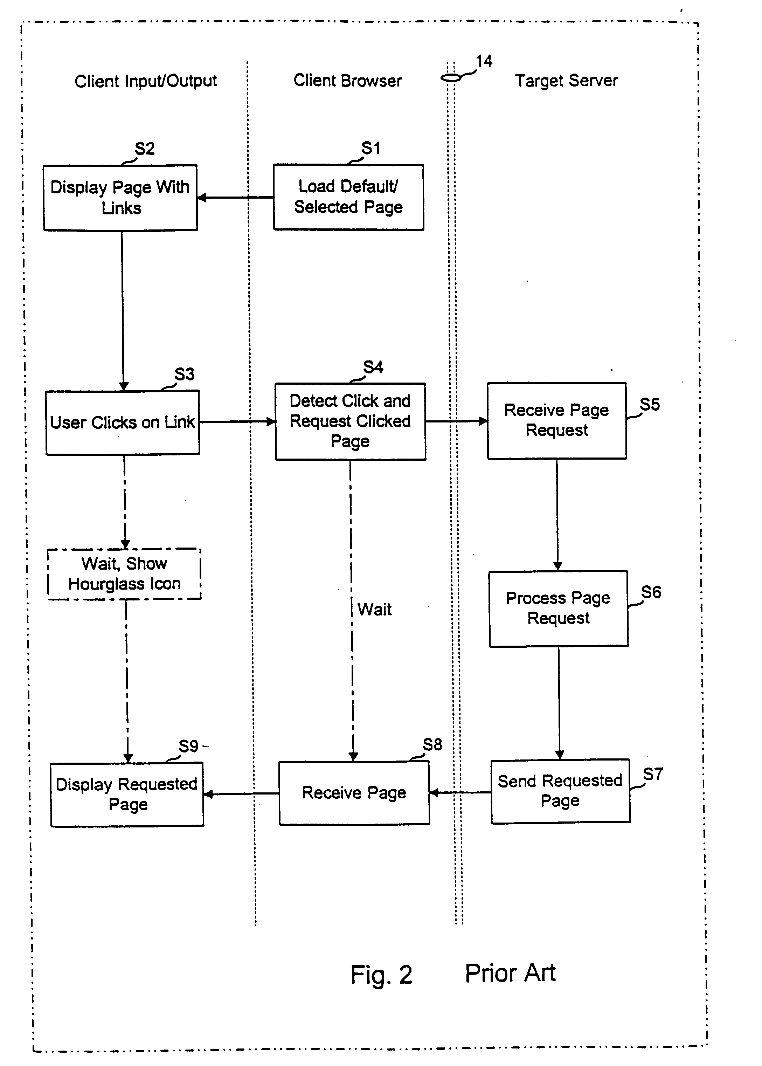

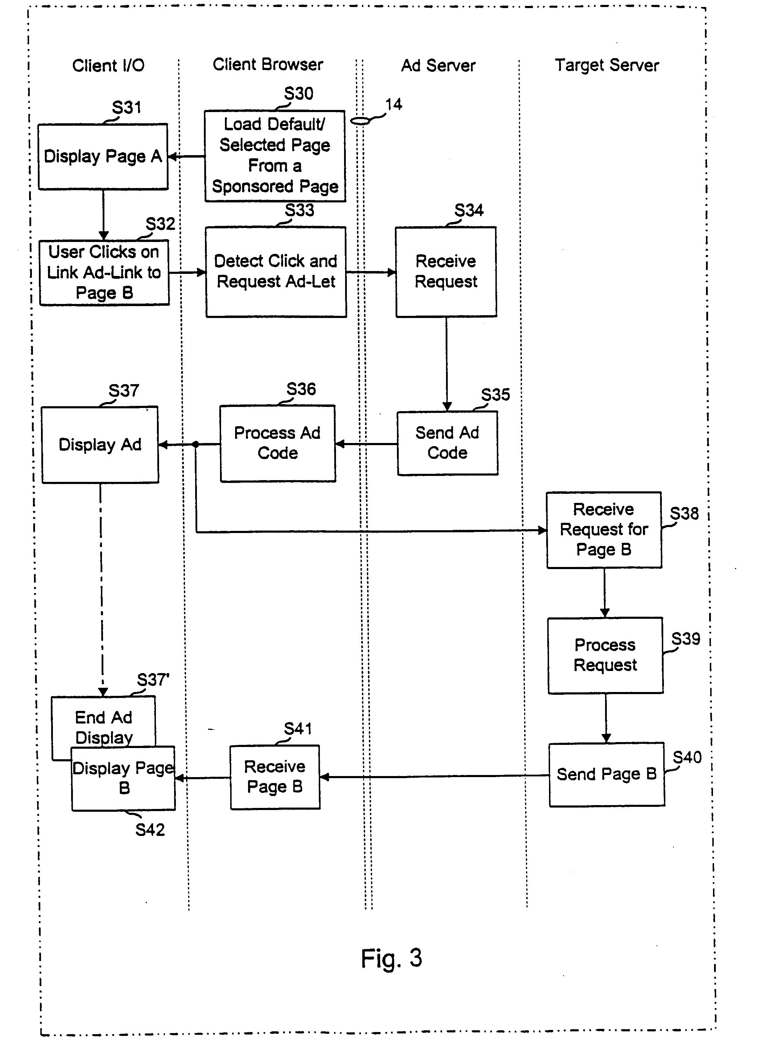

The roles of the different types of servers will now be explained with reference to FIG. 3, following an explanation of the conventional process for browsing the Web in connection with FIG. 2.

FIG. 2 is a flowchart showing the steps of a typical browsing process, illustrating what is shown on a client browser display, what actions are taken by the browser client software, what messages are passed over Internet 14 between the client browser and a target server, and the actions taken by the target server. Each step in FIG. 2 is labeled with a step number (S 1, S2, etc.) with corresponding references in the following description.

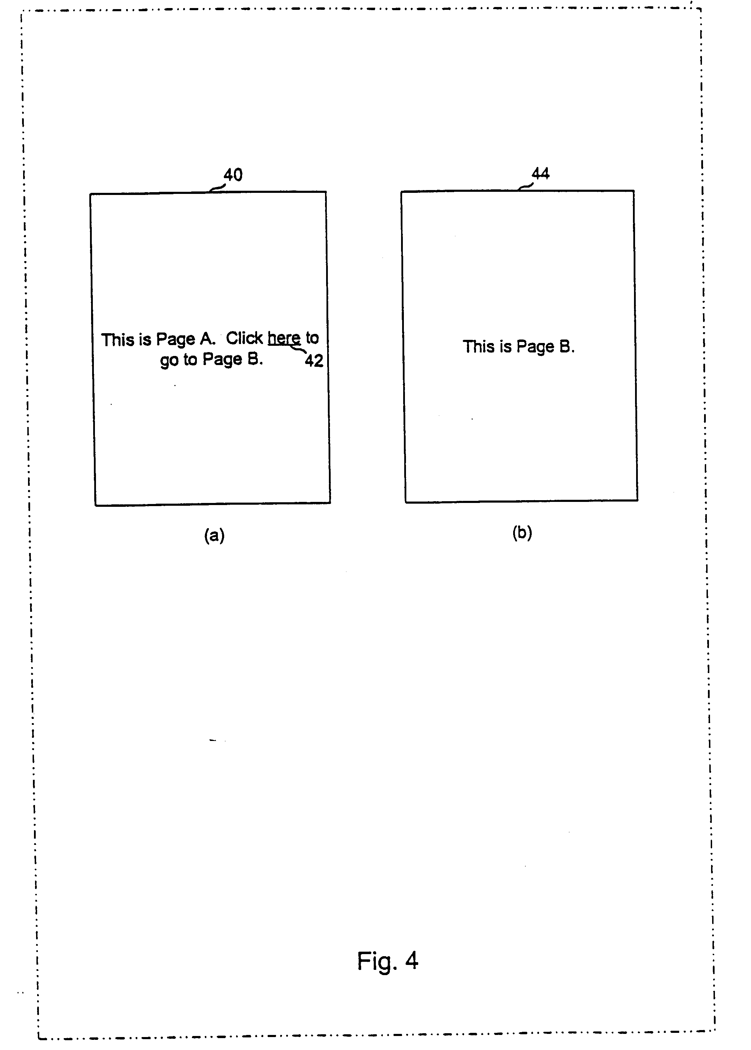

To begin, the client browser loads a default or selected page (S1). Depending on the browser, this could be a page specified as a start up parameter, a home page specified in a configuration file, the default start up page specified by the writer of the browser software, or the like. However, specified, the process of interacting with the user begins with the client browser displaying the page at on the browser display (S2). The page is displayed with links set apart from the rest of the text. An example of such a page is "Page A" 40 shown in FIG. 4(a) with a link 42 underlined to set it apart from the rest of the text. The HTML text contains the text snippet:
Click <a href="http://site/file">here</a> to go to Page B
which displays as:
Click here to go to Page B
where *site* is replaced with the server serving Page B and *file* is the name given to Page B on server site. The site and file are not displayed in the display, but are saved by the client browser in a reference table. When the user clicks a mouse cursor on the link (S3), or otherwise specifies the link, the browser client detects the selection and makes a request to the target server (S4) for the page selected by the user. The Target server receives the request (S5) and begins to process the page request (S6).

If the network connection between the client and the Internet, the server's connection, or the path through the Internet are slow, this process does not begin right away. When the server is done processing the page request, it sends the requested page to the client (S7) over the Internet and the client receives the page (S8) and displays it to the user (S9). An exemplary page 44 is shown in FIG. 4(b). If the target server is slow or overloaded, the server delay adds to the transit delay. Since this delay is often quite long, users might come to believe that the client machine of the browser software has frozen and stopped operating. To avoid this impression, the browser might show an animated icon, hourglass, rolling ball, or other indication of waiting. During this time, the user generally just waits for the Page B to arrive. The user cannot plan ahead because the user is not given any indication of how long the void time might be until it is over.

Referring now to FIG. 3, a process of efficiently using the void time is shown. As with the conventional methods, the client browser begins by loading a page (S30) and displaying it (S31), however the page displayed is from a sponsoring server. If the Page A referred to above is the page to be displayed, the display would appear as shown by page 40 in FIG. 4(a), but the browser would maintain a different link reference (URL) for link 42. The URL in this example is:
<a href="http://*ad*_*site*/ad.dll?id=1 &goto=http://site/file">
where *ad*_*site* is the domain name of the ad server and http://*site*/*file* is the URL for the reference (Page B in the example above). A sponsored server identifier ("id=l") is included in the URL, so that the ad server will know where the link came from. This is useful for tracking traffic and, where the sponsored server operator is paid based on the number of connections it sends to the ad server, the sponsored server identifier is used for revenue tracking.

When the user clicks on (or otherwise selects) the link to Page B (S32), the client browser detects the click and creates a request for the page (S33). Since the URL for the link points to the ad server rather than the server for Page B, the request is sent to the ad server. When the ad server receives the request (S34), it sends code to run an ad (S35), which is processed by the client browser (S36) and the ad is displayed on the display (S37). The particular code sent varies depending on implementation.

In one variation, the ad server asks the client for a "cookie" in response to receiving the ad link. A cookie is a data block (usually a string of text) given to a browser for holding until requested. Cookies are used so that servers can maintain a state for a browser client, with the browser client's assistance. If the browser client has and provides a particular cookie, the ad server will skip the step of sending the ad code and just send the request for relocation to the target page.

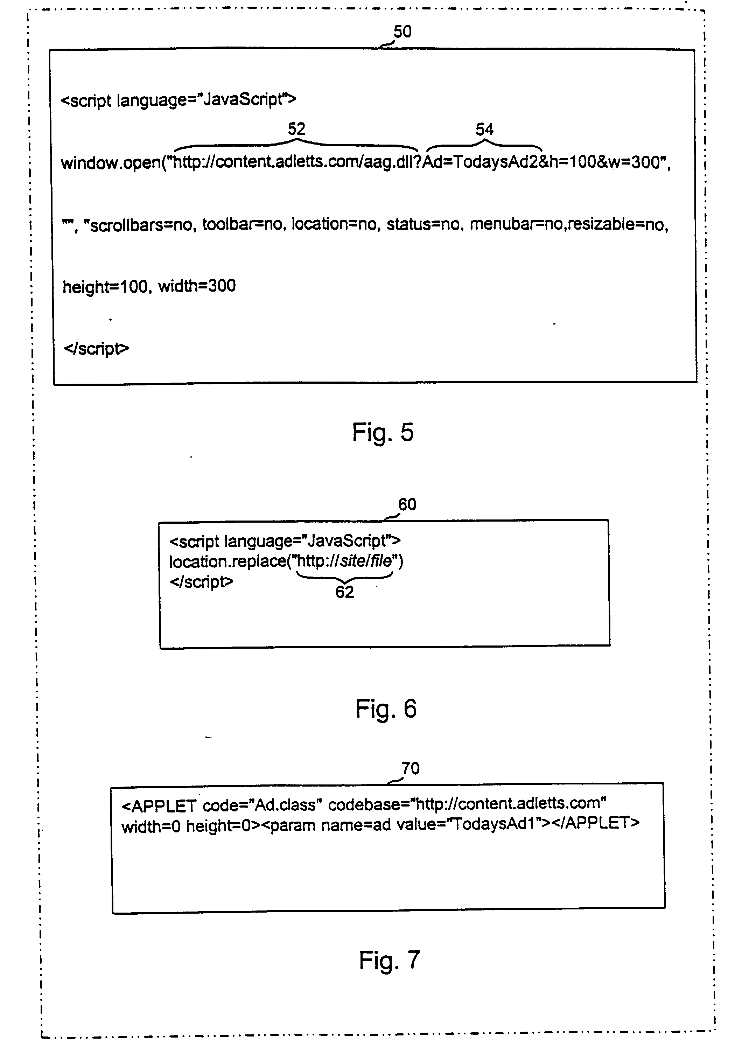

Two such implementations which might be used are a Java applet and a Java application. Where the ad is presented as a Java applet, the code sent in step S35 is sent as an HTML file. Fig. 5 is an example of such an HTML page 50. When the client browser receives HTML page 50, it opens a window using the parameters given, retrieving the content for the page specified by URL 52, passing it an ad specifier 54. At substantially the same time, the browser is "pushed" to the target page, by passing the browser another HTML page, such as page 60 shown in FIG. 6. Page 60 includes a target reference 62, which was obtained from the original request received in step S34. Consequently, while the ad is showing in a browser window, the target, Page B, is being requested from the target server (S38).

Similarly, if the code received in step S36 is a Java Application, the HTML page sent might look like a page 70 shown in FIG. 7. When received by the client browser, the client browser, if Java application-enabled, will open a new application window with the parameters shown. An example of a Java application and a Java Applet which might be provided are shown in Appendix A.

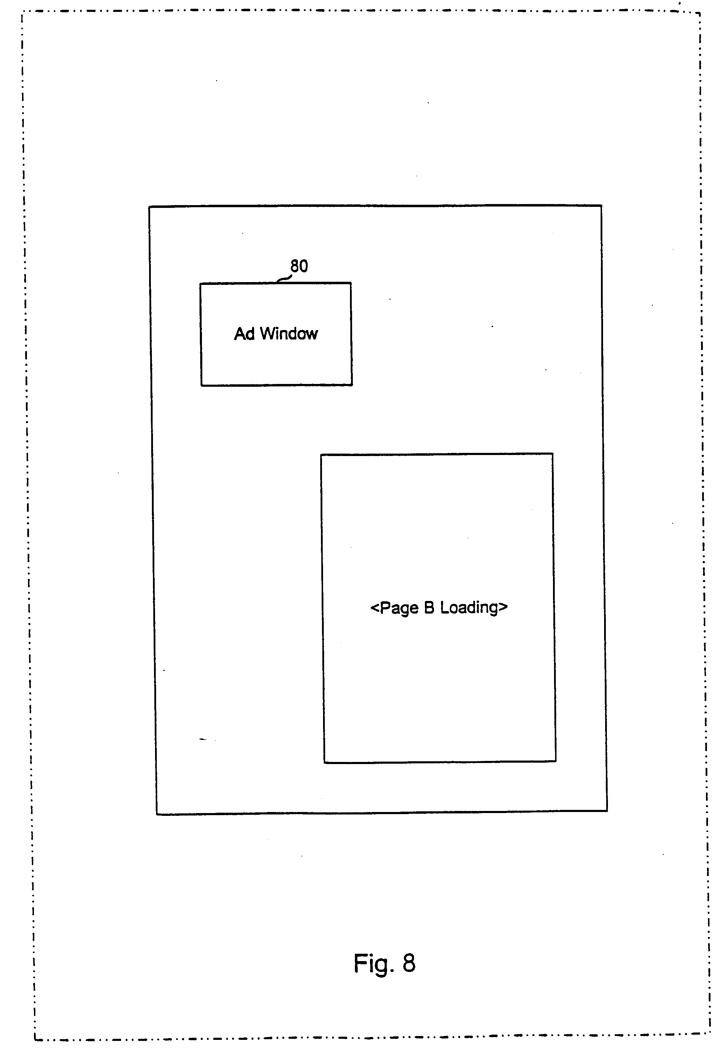

Either way, once the code is received by the browser (S36) and displayed (S37), providing a display include a page such as page 80 shown in FIG. 8, the user watches the ad while the target server is processing the request (S39) for the target page and sending the target page (which is Page B in this example) to the browser client (S40). When Page B is eventually received from the target server (S41), it is displayed in the window (S42) which existed before the ad window was opened. Since the ad is in its own window, it can still be playing (S37') when Page B is being received and displayed. In some instances, the ad is a continuous loop which plays and replays until a certain time limit is reached or Page B has loaded. In the latter case, the user is never faced with a lack of activity.

Preferably, the ad displayed in the ad window (see window 80 in FIG. 8) is an animation which entertains and informs the viewer while waiting for Page B to load. The ad window might also include active controls so that a user could click on the ad window, or a portion or portions thereof, to "click-though" to a site related to the advertisement to receive more information about the advertised product or service. In a specific embodiment, the ad server maintains a database of user demographics and targets the ad sent based on demographic information about that user stored in the database. The ad server might also select an ad from multiple versions of the ad depending on what the ad server knows about the user's connection speed or the particular browser the user is using.

Several advantages are provided by the above-described system, in addition to giving the client user something to do while pages are loading. Many server operators have useful and popular pages, but lack enough advertising to pay for providing the pages. By being a sponsored server and including ad links pointing directly to an ad server and indirectly to a desired page, the sponsored server could receive payment for traffic which passes through the ad server. Note that the target (Page B) page could either be on another sponsored server or could be on an independent server. Being a sponsored server is more convenient for the server operator than being a conventional "banner" advertiser, because banner advertiser's need to rework their pages to fit banners on the pages. With the present invention, the display is simpler, since the ad runs in a separate window.

In the preferred embodiment, the ad is an animation which is in the form of vector graphical elements which move combined with static bit maps, if any. With such animation, the changes in position of the graphical elements can be specified in relatively few bits, thus allowing the data for the animation to be downloaded in much less time than the time it takes to play the ad.

The above description is illustrative and not restrictive. Many variations of the invention will become apparent to those of skill in the art upon review of this disclosure. The scope of the invention should, therefore, be determined not with reference to the above description, but instead should be determined with reference to the appended claims along with their full scope of equivalents.

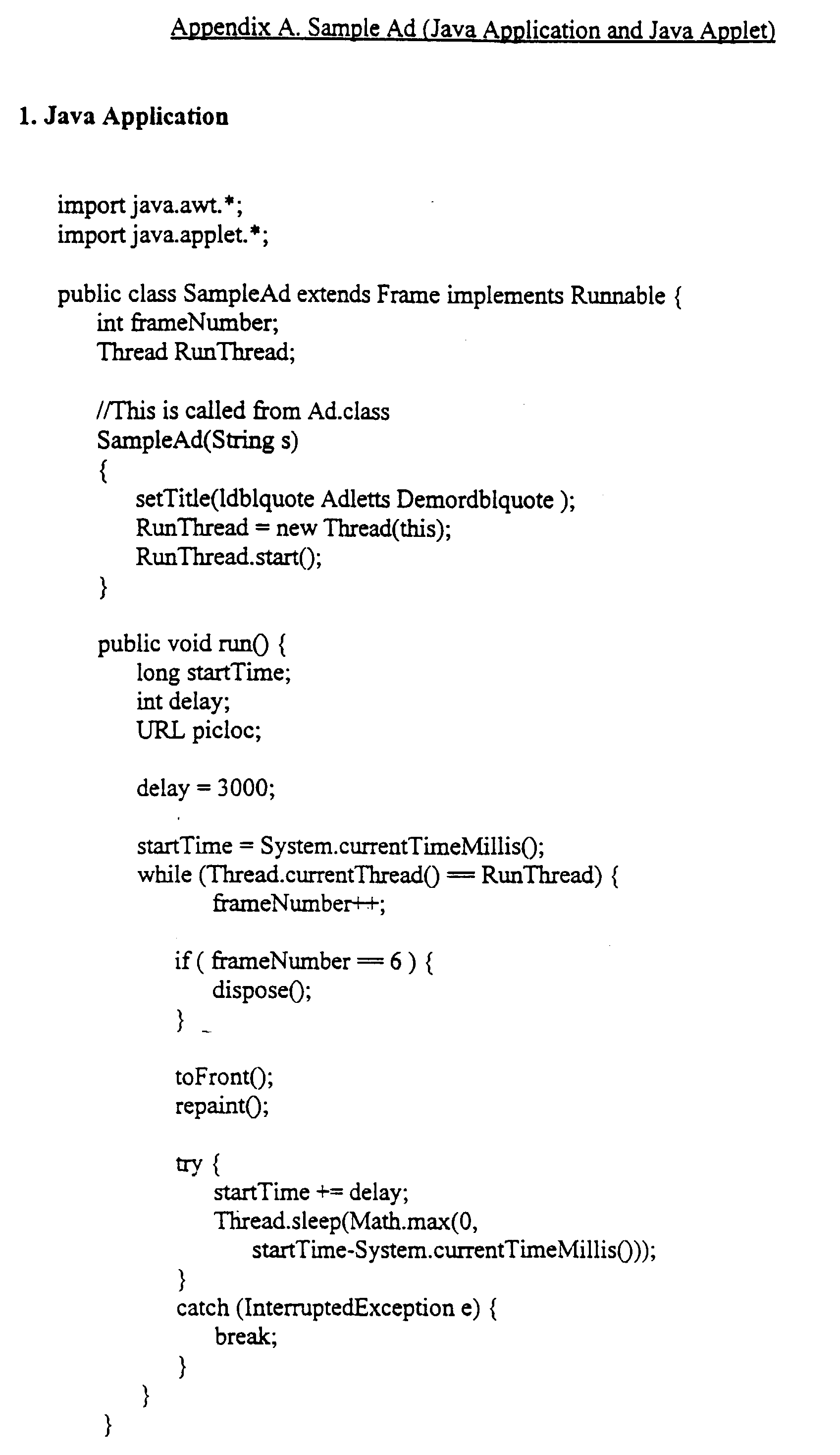

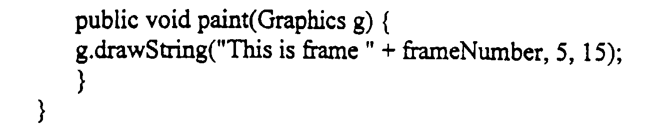

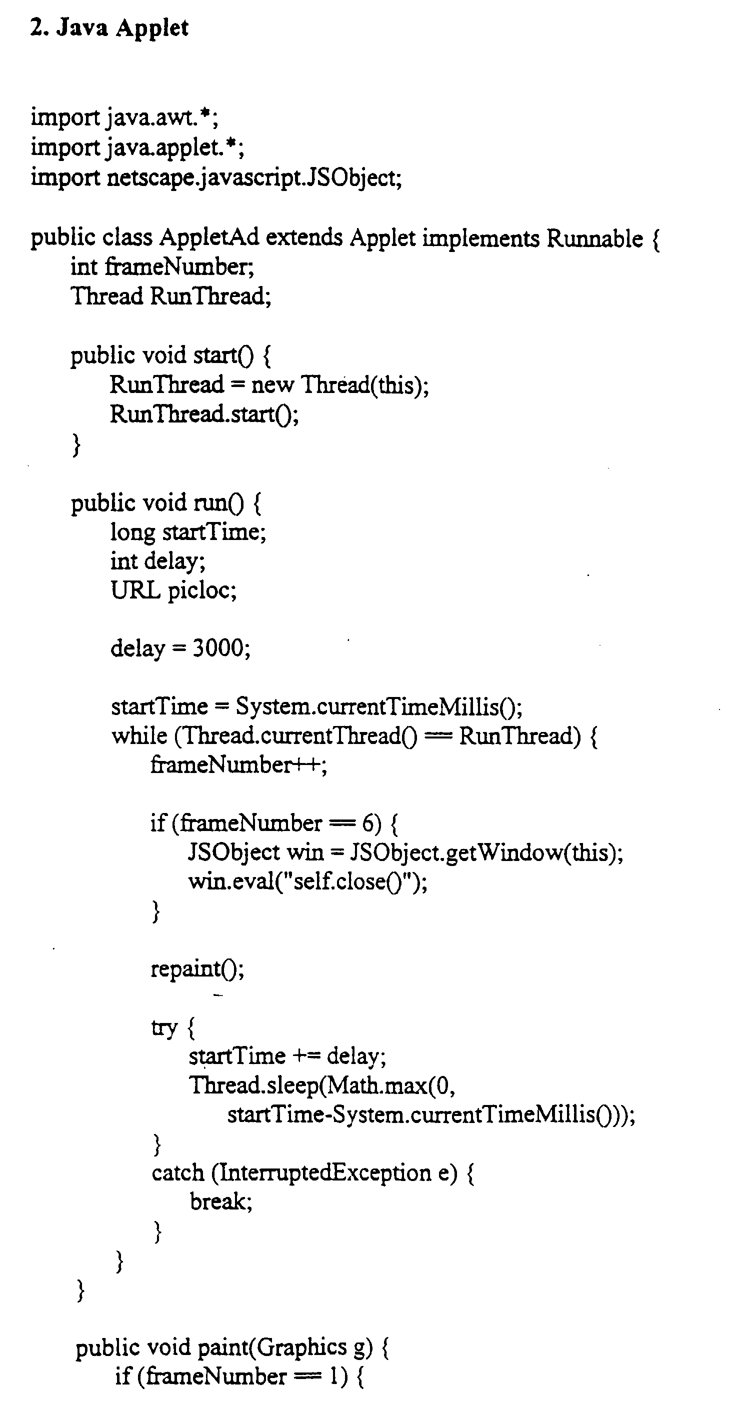

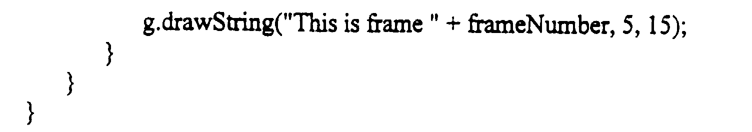

## Claims

1. The method of browsing a hypertext web, wherein a nonzero time elapses between the request for a target page and the presentation of the target page, the method comprising the steps of:
sending a page request from a browser client to an intermediate server;
after receipt of the request by the intermediate server, sending a data block representing an intermediate presentation to the browser client;
presenting the intermediate presentation on a display coupled to the browser client; and
prior to the completion of the intermediate presentation, requesting the target page from the target server to the browser-client, for display on the display.

2. The method of claim 1, wherein the step of presenting an intermediate presentation is a step of presenting an advertisement.

3. The method of claim 2, wherein the advertisement is a selected one of a plurality of advertisements and the advertisement selected is a function of a browser type, client network address, or demographic information about the user.

4. The method of claim 1, wherein the presentation is a an animation.

5. The method of claim 1, wherein the step of requesting the target page comprises the steps of:
sending a reference to the target page from the intermediate server to the client browser; and
sending the reference from the client browser to a target server serving the target page.

6. The method of browsing a hypertext web, wherein a nonzero time elapses between the request for a target page and the presentation of the target page, the method comprising the steps of:
sending a page request from a browser client to an intermediate server;
after receipt of the request by the intermediate server, sending a data block representing an intermediate presentation to the browser client;
presenting the intermediate presentation on a display coupled to the browser client;
substantially simultaneously with the sending of the data block, sending a request for the target page to the target server; and
sending the requested page from the target server to the browser client, for display on the display.

7. The method of claim 6, wherein the step of sending a request for the target page is a step of sending a request from the intermediate server.

8. The method of claim 6, wherein the step of sending a request for the target page is a step of sending a request from the client browser.

9. The method of claim 8, wherein the step of sending a request from the client browser is preceded by a step of sending the request from the intermediate server to the client browser.
